Europäisches Patentamt

European Patent Office

Office européen des brevets

(19)

(11) Numéro de publication: **0 064 461**
**A2**

(12) # DEMANDE DE BREVET EUROPEEN

(21) Numéro de dépôt: **82400767.8**

(22) Date de dépôt: **28.04.82**

(51) Int. Cl.³: **G 02 F 1/17**

(30) Priorité: **30.04.81 FR 8108687**

(43) Date de publication de la demande:
**10.11.82 Bulletin 82/45**

(84) Etats contractants désignés:
**AT BE CH DE GB IT LI LU NL SE**

(71) Demandeur: **JAEGER**
**2, rue Baudin**
**F-92303 Levallois-Perret(FR)**

(72) Inventeur: **Pompei Katz de Warrens, Jean**
**7, Résidence de la Gaillarderie**
**F-78590 Noisy-Le-Roi(FR)**

(72) Inventeur: **Gonin, Michel**
**7, villa Emile Bergerat**
**F-92200 Neuilly sur Seine(FR)**

(74) Mandataire: **Corre, Jacques Denis Paul et al,**
**Cabinet Regimbeau 26, Avenue Kléber**
**F-75116 Paris(FR)**

(54) **Electrolyte à support organique pour cellule d'affichage électrolytique.**

(57) La présente invention concerne un nouvel électrolyte pour cellule d'affichage électrolytique, du type à base d'iodures métalliques dissous dans un solvant organique.

Il est caractérisé en ce que le solvant organique est constitué par un mélange de butyronitrile et de butanol. De façon avantageuse, ce mélange de solvant organique sera choisi avec une composition voisine de l'azéotrope.

EP 0 064 461 A2

ELECTROLYTE A SUPPORT ORGANIQUE, POUR CELLULE
D'AFFICHAGE ELECTROLYTIQUE.

La présente invention concerne un nouvel électrolyte pour cellule d'affichage électrolytique, du type à base d'iodures métalliques dissous dans un solvant organique.

Dans la technique antérieure il a déjà été préconisé de faire appel à divers solvants organiques, ou couples de solvants organiques. A titre d'exemples de tels solvants organiques, on peut citer l'acétonitrile, le méthanol, l'éthanol, le glycérol, le furfural, ainsi que les mélanges méthanol-acétonitrile, éthanol-acétonitrile, et carbonate de propylène-acétonitrile.

Jusqu'à présent c'était le mélange acétonitrile-méthanol (1/3-2/3) qui s'était avéré le plus satisfaisant dans la pratique. Ce mélange particulier présente cependant un certain nombre d'inconvénients majeurs auxquels la présente invention se propose précisément de remédier.

La présente invention concerne en effet un électrolyte du type général défini précédemment, caractérisé en ce que le solvant organique est constitué par un mélange de butyronitrile et de butanol. De façon avantageuse, ce mélange de solvant organique sera choisi avec une composition voisine de l'azéotrope.

Selon une autre caractéristique de la présente invention, le solvant organique peut être avantageusement amené et/ou maintenu à l'état anhydre par chauffage à une température de 105°C, notamment par stockage dans une étuve à 105°C, ou encore par passage dans un dispositif dessicateur.

Il a été constaté que la stabilité de ce type d'électrolyte à support organique reposait sur l'oxydation et la complexation des ions $I^{\ominus}$ par l'iode. Ce support ou solvant organique doit donc pouvoir dissoudre l'iode dans la gamme de température de fonctionnement d'une cellule électrolytique. Si l'on se fixe par exemple une gamme de température de fonctionnement s'étendant de -50°C à + 100°C, on impose de ce fait aux constituants du support organique d'avoir un point de fusion inférieur à -50°C et un point d'ébullition d'azéotrope supérieur à 100°C.

Le tableau I comparatif mentionné ci-après illustre bien le fait que le support organique selon la présente invention permet l'obtention de cellules électrolytiques dotées de gammes de températures de fonctionnement nettement plus étendues que celles pouvant être obtenues avec le support solvant le plus usité jusqu'à présent dans la technique antérieure, à savoir le couple acétonitrile-méthanol.

TABLEAU I

| SOLVANT ORGANIQUE | FORMULE | POINT DE FUSION | POINT EBULLI-TION | AZEOTROPE BINAIRE | | POIDS MOLE-CULAI-RE | DENSITE | $n_D$ |
|---|---|---|---|---|---|---|---|---|
| | | | | composi-tion | temp. ébulli-tion | | | |
| ACETONITRILE | $CH_3-C\equiv N$ | - 45,70°C | 81,6°C | 81,00% | 63,5°C | 41,05 | 0,7857 | 1,34423 |
| METHANOL | $CH_3-OH$ | - 93,90°C | 65,15°C | 19,00% | | 32,04 | 0,7914 | 1,3288 |
| BUTYRONITRILE | $CH_3-(CH_2)_2-C\equiv N$ | -112,00°C | 118,00°C | 50,00% | 113,00°C | 69,11 | 0,7936 | 1,3842 |
| BUTANOL | $CH_3-(CH_2)_2-CH_2-OH$ | - 89,50°C | 117,20°C | 50,00% | | 74,12 | 0,8098 | 1,3993 |

3

De surcroît, il est indispensable que le solvant organique ne forme pas d'azéotrope ternaire avec l'eau. En effet, la présence éventuelle, au sein de la cellule d'affichage électrolytique, de molécules d'eau qui vont s'absorber sur les parois de la cellule, va détruire la réversibilité du mécanisme électrolytique de la cellule et, par conséquent, va diminuer sa durée de vie.

Dans le cas particulier du mélange acétonitrile-méthanol de la technique antérieure, on partait habituellement d'un mélange (30,0 % - 66,0 %) pour atteindre une composition finale voisine de l'azéotrope (81,0 % - 19,0 %) dont le point d'ébullition est de 63,5°C. Un tel point d'ébullition de 63,5°C soumet le scellement de l'afficheur à des contraintes préjudiciables à sa durée de vie dès que la température de ce dernier dépasse cette valeur. Il est bien clair qu'un tel risque se trouve totalement écarté lorsque l'on fait appel au mélange butyronitrile-butanol dont l'azéotrope se situe à 113°C. De surcroît, on constate que la forte proportion finale de 50 % en butanol, qui constitue le principal solvant de l'iode, est très nettement supérieure à celle du méthanol (21 %) dans le mélange précédemment utilisé dans la technique antérieure.

Enfin, en faisant appel au mélange de solvants organiques objet de la présente invention, il devient possible de remplir la cellule à la pression ordinaire sous azote et à une température de 105°C par exemple sur plaque chauffante, ce qui constitue un autre avantage décisif résultant du choix particulier du support organique de l'électrolyte.

Il convient enfin de noter que le mélange butyronitrile-butanol est un excellent solvant des sels d'argent, qu'il présente une bonne inertie chimique vis-à-vis du métal déposé et qu'il est électrochimiquement stable dans les conditions habituelles de fonctionnement des cellules électrochimiques. Il assure enfin une parfaite mobilité des ions $Ag^+$, ce qui permet des vitesses de commutation importantes de la cellule électrolytique.

Le mélange de solvants organiques butyronitrile-butanol est destiné à dissoudre des électrolytes essentiellement à base d'iodures métalliques, et plus particulièrement des électrolytes à base d'iodure d'argent. Il est cependant parfaitement clair que l'iodure d'argent peut être accompagné d'autres iodures minoritaires et/ou majoritaires, tels que par exemple l'iodure de potassium.

A titre d'exemple non limitatif, on mentionnera ci-après une composition particulière d'un électrolyte destiné à permettre la réalisation de cellule d'affichage électrolytique.

Exemple de composition électrolytique

0,15 mole d'iodure d'argent
1     mole d'iodure de potassium
1     litre du mélange butyronitrile-butanol (50-50).

REVENDICATIONS

1/ Electrolyte pour cellule d'affichage électrolytique, du type à base d'iodures métalliques dissous dans un solvant organique, caractérisé en ce que ledit solvant organique est constitué par un mélange de butyronitrile et de butanol.

2/ Electrolyte selon la revendication 1, caractérisé en ce que ledit mélange de butyronitrile et de butanol présente une composition sensiblement voisine de l'azéotrope.

3/ Electrolyte selon l'une des revendications 1 et 2, caractérisé en ce que ledit solvant organique est amené et/ou maintenu à l'état anhydre par chauffage à une température de 105°C, en particulier par stockage dans une étuve à 105°C.

4/ Electrolyte selon l'une des revendications 1 et 2, caractérisé en ce que ledit solvant organique est amené et/ou maintenu à l'état anhydre par passage dans un dispositif dessicateur.